# EUROPEAN PATENT APPLICATION

(11) **EP 4 318 955 A1**
(43) Date of publication of application: **07.02.2024**
(21) Application number: 23185825.9
(22) Date of filing: 17.07.2023
(51) Int. Cl.: H04B 1/10, H04B 1/525

(54) **MITIGATING HARMONIC WHEN RECEIVING A SIGNAL**

(30) Priority: 21.07.2022 FI 20225681
(71) Applicant: Nokia Solutions and Networks Oy, 02610 Espoo (FI)
(72) Inventor: FLEISCHER, Marko, Unterhaching (DE); JELONNEK, Björn, Ulm (DE); STEIERT, Martin, Blaustein (DE); RÖSCHKE, Rene, Mammendorf (DE); HELLMANN, Jan, Munich (DE); SÖNNICHSEN, Dirk, Blaustein (DE)
(74) Representative: Nokia EPO representatives

(57) **Abstract**

Disclosed is a method comprising transmitting a first signal, obtaining an indication of a harmonic, wherein the harmonic is caused by the transmission of the first signal, determining, based on the indication of the harmonic, an estimation of the harmonic, receiving a second signal, wherein the second signal comprises the harmonic, and subtracting the estimation of the harmonic from the second signal.

## Description

### Field

The following exemplary embodiments relate to wireless communication and improving receiver sensitivity by mitigation of harmonics.

### Background

Wireless communication networks, such as cellular communication networks evolve, and thus there may be multi-band, multi carrier transmissions in frequency division duplex (FDD) deployments. Yet, harmonics, that may be active and/or passive harmonics, may also occur and to ensure that performance of a receiver receiving signals from the wireless network is not degraded, it is desirable to mitigate the harmonics that may occur.

### Brief Description

The scope of protection sought for various embodiments of the invention is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising means for: transmitting a first signal, obtaining an indication of a harmonic, wherein the harmonic is caused by the transmission of the first signal, determining, based on the indication of the harmonic, an estimation of the harmonic, receiving a second signal, wherein the second signal comprises the harmonic, and subtracting the estimation of the harmonic from the second signal.

In some example embodiments according to the first aspect, the means comprises at least one processor, and at least one memory, including a computer program code, wherein the at least one memory and the computer program code are configured, with the at least one processor, to cause the performance of the apparatus.

According to a second aspect there is provided an apparatus comprising at least one processor, and at least one memory including a computer program code, wherein the at least one memory and the computer program code are configured, with the at least one processor, to cause the apparatus to: transmit a first signal, obtain an indication of a harmonic, wherein the harmonic is caused by the transmission of the first signal, determine, based on the indication of the harmonic, an estimation of the harmonic, receiving a second signal, wherein the second signal comprises the harmonic, and subtract the estimation of the harmonic from the second signal.

According to a third aspect there is provided a method comprising: transmitting a first signal, obtaining an indication of a harmonic, wherein the harmonic is caused by the transmission of the first signal, determining, based on the indication of the harmonic, an estimation of the harmonic, receiving a second signal, wherein the second signal comprises the harmonic, and subtracting the estimation of the harmonic from the second signal.

According to a fourth aspect there is provided a computer program comprising instructions for causing an apparatus to perform at least the following: transmit a first signal, obtain an indication of a harmonic, wherein the harmonic is caused by the transmission of the first signal, determine, based on the indication of the harmonic, an estimation of the harmonic, receiving a second signal, wherein the second signal comprises the harmonic, and subtract the estimation of the harmonic from the second signal.

According to a fifth aspect there is provided a computer program comprising instructions stored thereon for performing at least the following: transmitting a first signal, obtaining an indication of a harmonic, wherein the harmonic is caused by the transmission of the first signal, determining, based on the indication of the harmonic, an estimation of the harmonic, receiving a second signal, wherein the second signal comprises the harmonic, and subtracting the estimation of the harmonic from the second signal.

According to a sixth aspect there is provided a non-transitory computer readable medium comprising program instructions for causing an apparatus to perform at least the following: transmit a first signal, obtain an indication of a harmonic, wherein the harmonic is caused by the transmission of the first signal, determine, based on the indication of the harmonic, an estimation of the harmonic, receiving a second signal, wherein the second signal comprises the harmonic, and subtract the estimation of the harmonic from the second signal.

According to a seventh aspect there is provided a non-transitory computer readable medium comprising program instructions stored thereon for performing at least the following: transmitting a first signal, obtaining an indication of a harmonic, wherein the harmonic is caused by the transmission of the first signal, determining, based on the indication of the harmonic, an estimation of the harmonic, receiving a second signal, wherein the second signal comprises the harmonic, and subtracting the estimation of the harmonic from the second signal.

### List of Drawings

In the following, the invention will be described in greater detail with reference to the embodiments and the accompanying drawings, in which
FIG. 1 illustrates an example embodiment of a radio access network.
FIG. 2A illustrates an example embodiment of a hybrid antenna comprising several integrated transceivers.
FIG. 2B illustrates an example embodiment in which an access node performs both transmission and reception of signals and harmonics occur.
FIG. 2C illustrates an example embodiment in which harmonics disturb time division duplex -based implementation.
FIG. 3 illustrates an example embodiment of mitigating harmonic that is caused by transmission and causes reduction of receiver performance.
FIG. 4 illustrates an example embodiment in which 3^{rd} order harmonic model with memory and delay structure is illustrated in a simplified manner.
FIG. 5A illustrates an example embodiment in which harmonic is mitigated using Tx data.
FIG. 5B illustrates PIM harmonic cancellation results obtained from an experimental setup.
FIG. 5C illustrates and example embodiment with a modification to the example embodiment of FIG. 5A.
FIG. 5D illustrates another example embodiment that is a modification of the example embodiment of FIG. 5A.
FIG. 6 and FIG. 7 illustrate example embodiments of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Global System for Mobile Communications (GSM) or any other second generation cellular communication system, Universal Mobile Telecommunication System (UMTS, 3G) based on basic wideband-code division multiple access (W-CDMA), high-speed packet access (HSPA), Long Term Evolution (LTE), LTE-Advanced, a system based on IEEE 802.11 specifications, a system based on IEEE 802.15 specifications, and/or a fifth generation (5G) mobile or cellular communication system. The embodiments are not, however, restricted to the system given as an example but a person skilled in the art may apply the solution to other communication systems provided with necessary properties.

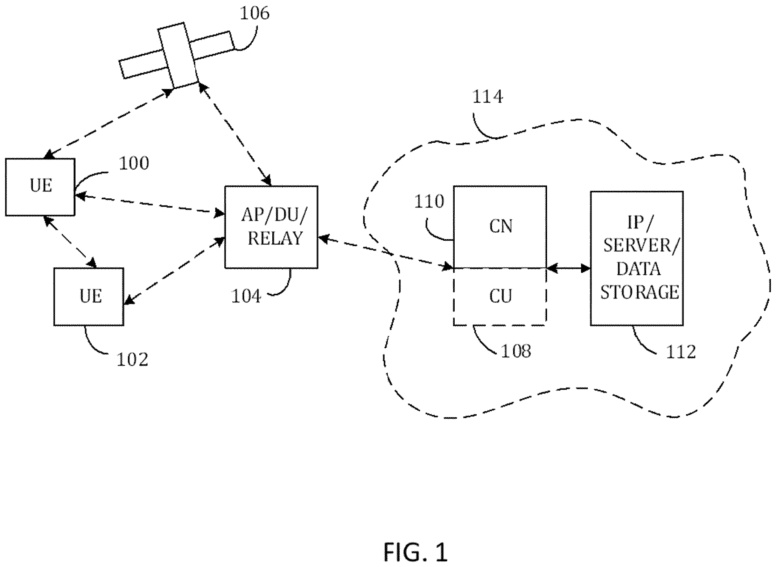

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an exemplifying radio access network.

FIG. 1 shows terminal devices 100 and 102 configured to be in a wireless connection on one or more communication channels in a cell with an access node (such as (e/g)NodeB) 104 providing the cell. The access node 104 may also be referred to as a node. The wireless link from a terminal device to a (e/g)NodeB is called uplink or reverse link and the wireless link from the (e/g)NodeB to the terminal device is called downlink or forward link. It should be appreciated that (e/g)NodeBs or their functionalities may be implemented by using any node, host, server or access point etc. entity suitable for such a usage. It is to be noted that although one cell is discussed in this exemplary embodiment, for the sake of simplicity of explanation, multiple cells may be provided by one access node in some exemplary embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices (UEs) to external packet data networks, or mobile management entity (MME), etc.

The terminal device (also called UE, user equipment, user terminal, user device, etc.) illustrates one type of an apparatus to which resources on the air interface are allocated and assigned, and thus any feature described herein with a terminal device may be implemented with a corresponding apparatus, such as a relay node. An example of such a relay node is a layer 3 relay (self-backhauling relay) towards the base station. Another example of such a relay node is a layer 2 relay. Such a relay node may contain a terminal device part and a Distributed Unit (DU) part. A CU (centralized unit) may coordinate the DU operation via F1AP -interface for example.

The terminal device may refer to a portable computing device that includes wireless mobile communication devices operating with or without a subscriber identification module (SIM), or an embedded SIM, eSIM, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be an exclusive or a nearly exclusive uplink only device, of which an example is a camera or video camera loading images or video clips to a network. A terminal device may also be a device having capability to operate in Internet of Things (IoT) network which is a scenario in which objects are provided with the ability to transfer data over a network without requiring human-to-human or human-to-computer interaction. The terminal device may also utilise cloud. In some applications, a terminal device may comprise a small portable device with radio parts (such as a watch, earphones or eyeglasses) and the computation is carried out in the cloud. The terminal device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple input- multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G may require bringing the content close to the radio which may lead to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, and/or utilise services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology that may be used includes for example Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling or service availability in areas that do not have terrestrial coverage. Satellite communication may utilise geostationary earth orbit (GEO) satellite systems, but also low earth orbit (LEO) satellite systems, for example, mega-constellations. A satellite 106 comprised in a constellation may carry a gNB, or at least part of the gNB, that create on-ground cells. Alternatively, a satellite 106 may be used to relay signals of one or more cells to the Earth. The on-ground cells may be created through an on-ground relay node 104 or by a gNB located on-ground or in a satellite or part of the gNB may be on a satellite, the DU for example, and part of the gNB may be on the ground, the CU for example. Additionally, or alternatively, high-altitude platform station, HAPS, systems may be utilized.

It is to be noted that the depicted system is an example of a part of a radio access system and the system may comprise a plurality of (e/g)NodeBs, the terminal device may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. In some exemplary embodiments, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. A network which is able to use "plug-and-play" (e/g)NodeBs, may include, in addition to Home (e/g)NodeBs (H(e/g)nodeBs), a home node B gateway, or HNB-GW (not shown in FIG. 1). A HNB Gateway (HNB-GW), which may be installed within an operator's network may aggregate traffic from a large number of HNBs back to a core network.

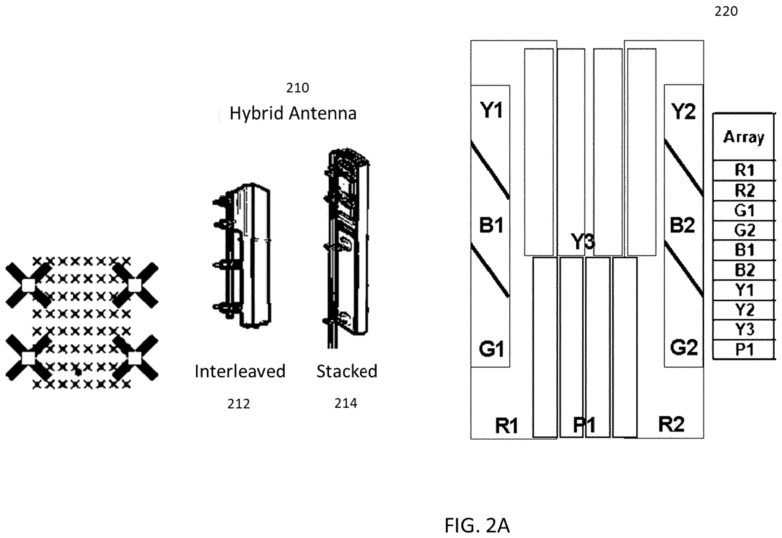

Harmonics may cause decrease in performance of a receiver that is configured to receive a signal from a wireless communication network. Harmonics may be active or passive. Active harmonics may be caused for example by usage of power amplifiers (PA) while passive harmonics caused by passive intermodulation (PIM) on the other hand occur may be caused in an antenna network for example. The evolution of wireless communication systems allows multi-band, multi carrier transmissions in FDD deployments. In a multi-band transmission, a PA of a transmitter may operate and support concurrent multi-band frequency ranges or, alternatively, a device architecture comprising multiple PAs may be utilized. In some implementations, multiple transceivers may be integrated together with several antennas in a common radome to form a so-called hybrid antenna, which may increase a likelihood of harmonics of a transmission signal falling into frequency ranges used for receiving signals from the wireless network. Such harmonics may be passive harmonics due to the several antennas. FIG. 2A illustrates an example embodiment of a hybrid antenna 210 comprising several integrated transceivers of different frequency bands in same radome as illustrated in the FIG. 2A by 220. The hybrid antenna may be an interleaved 212 or a stacked antenna 214. As illustrated in FIG. 2A, the hybrid antennas may have several arrays. It is to be noted that for each array there may be a dedicated frequency band.

The harmonics that may occur in a hybrid antenna architecture, such as that illustrated in FIG. 2A, may be caused one or more PAs and/or by antenna network for example. The harmonics may severely degrade the receive performance and may lead to receiver desensitization. Thus, it is desirable to reduce such harmonics and to suppress those, for example, below thermal noise level. The harmonics may land at frequencies in which uplink service is scheduled and thus the uplink service may be degraded. The degradation caused by the harmonic noise may be mitigate using a cancellation approach.

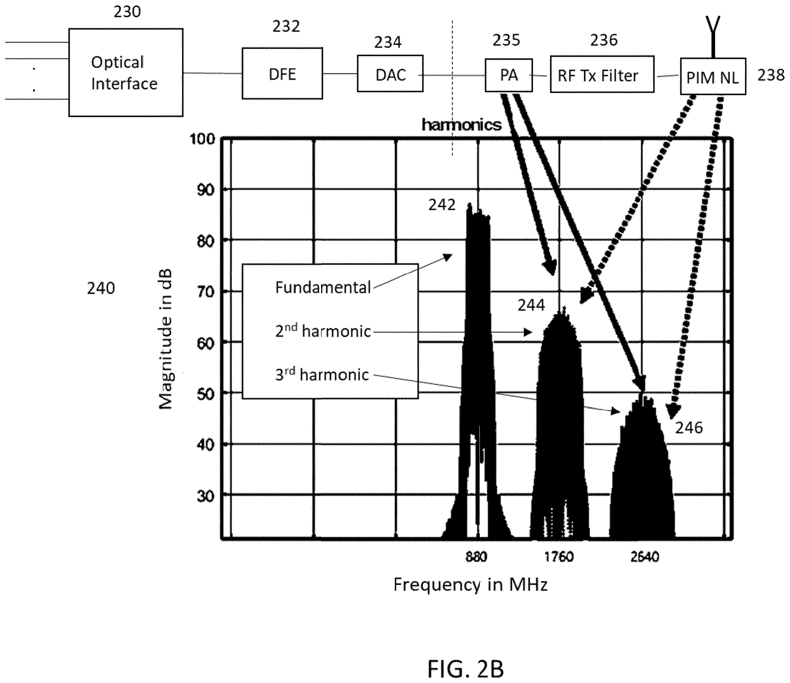

FIG. 2B illustrates an example embodiment in which an access node performs both transmission and reception of signals and harmonics occur. In this example embodiment, the transmission unit of the access node comprises an optical interface 230, a digital front end (DFE) 232 and a digital to analogue (DAC) converter 234, which converts data that is to be transmitted, to an analogue signal. The analogue signal is then amplified by PA 235, after which radio frequency (RF) transmission (Tx) filter 236 is used to filter the signal. As in this example embodiment, passive harmonic occurs, there is also passive intermodulation nonlinearity (PIM NL) 238 that causes the PIM harmonic. As is illustrated by the graph 240, there are harmonics such as the fundamental harmonic 242, which may be a wanted signal, a second harmonic 244, which is caused by the PA 235 and the PIM NL 238 and a third harmonic 246 caused by the PA 235 and the PIM NL 238 as well. It is to be noted that either passive or active harmonics may occur or they may both occur. The higher the order of the harmonic, the wider is the noise of its characteristic. The severity of the impact of harmonic noise level is reduced with increasing order. For example, in this example embodiment, the 2^{nd} harmonic falls into the frequency band 66 used for receiving, which may lead to receiver desensitization.

It is to be noted that the example embodiment of FIG. 2B may also be applicable to active harmonics, which may be caused by the PA 235, when for example the Tx filter 236 is not suppressing active harmonics or is at least not suppressing those appropriately.

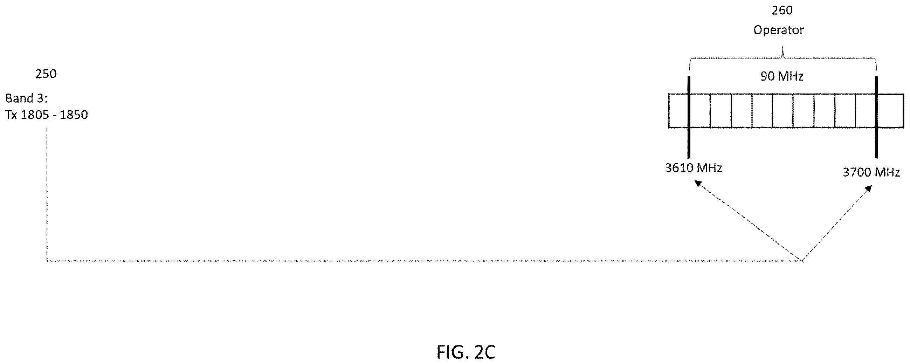

It is to be noted that harmonics may also disturb time division duplex (TDD) based implementations when a TDD time slot is in a receive mode. Harmonics may also play a role in implementations in which TDD and FDD bases system work in parallel. For example, problems may be caused in FDD receive bands or in TDD in the receive cycle. Also, even if different TDD based system work together which are using different DL/Ul duty cycles, disturbances caused by harmonics may occur. Disturbance to TDD based implementations caused by harmonics is illustrated in FIG. 2C. In this example embodiment, there is an access node with a stacked antenna, which transmits downlink (DL) service 250 that uses a frequency band 3, between 1805-1850 MHz. The transmissions may cause, in this example embodiment, a second harmonic to land in a 5G TDD frequency range of 3.16-3.7 GHz and thus cause problems when the access node is to receive at such frequency range. For example, an operator may operate at the band 3 to provide service using the stacked antenna and the operator may additionally operate using the 5G TDD frequency range of 3.16-3.7 GHz. Alternatively, the stacked antenna of the access node may be utilized by two different operator one of which provides the service at band 3 and the other one operates using the 5G TDD frequency range of 3.16-3.7 GHz onto which the harmonics are caused. Harmonics might be avoided, or mitigated to a level which is no longer relevant for Rx, by having the antennas separated to their own radomes for band 3, thus increasing isolation and attenuation, but that would then increase the antenna footprint. It is also to be noted that multiple operators may share a same site.

If an indication of a harmonic, which may be an active or passive harmonic, is obtained, then based on that indication, an estimation of the harmonic may be determined. Based on the estimation of the harmonic, an inverse of that harmonic may also be obtained and as such, the estimation may be subtracted from a received signal that is expected to be disturbed by the harmonic. For example, if there is knowledge of a known PIM harmonic signal, or at least a reference of a transmission signal that is expected to cause harmonic to the received signal, those may be understood as indications of a harmonic. The transmission signal may be a real transmission signal, or it may be a reference of a transmission signal, such as an estimation of a reference signal obtained based on historical data for example. The estimation of the harmonic may further be modified by inverting its phase, by matching it in terms of delay to the reception of the signal as well as scaling it in magnitude. Scaling may be achieved by using filtering and weighting coefficients. By subtracting the estimation of the harmonic from the received signal, harmonic may be reduced, which improves signal-to-noise-plus-interference ratio (SNIR) relationship in the receive channel and enables higher UL throughput. The subtraction may be performed in a digital domain and may be performed by a digital front end (DFE). It is also to be noted that such estimation and subtraction may be performed by an access node but also by any other wireless system in which a receiver is susceptible to suffering from harmonic noise caused by transmissions performed by the same device or system.

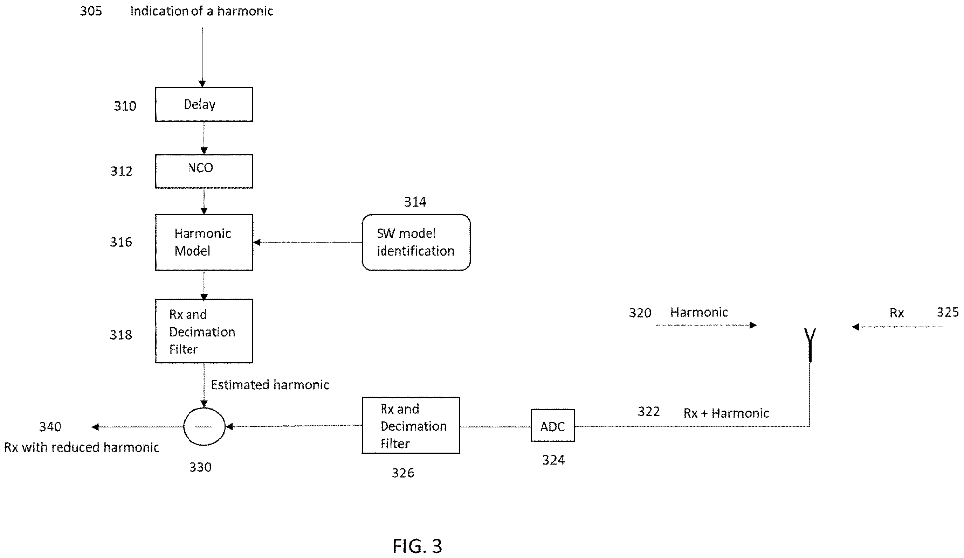

FIG. 3 illustrates an example embodiment of mitigating harmonic that is caused by transmission and causes reduction of receiver performance. In this example embodiment, an access node, which alternatively could also be a transceiver of any other suitable device or system, is associated with transmission of a signal, or signals, Tx, that cause harmonics when receiving another signal, or signals, Rx. Alternatively, or additionally, the access node may have knowledge regarding the harmonic itself. For example, there may be a priori knowledge regarding Tx/Rx frequency, based on which it can be determined that the configuration of the access node is prone to harmonics. Thus, the access node, may obtain an indication of a harmonic 305, which may be in digital format. The indication of the harmonic 305 may change as the harmonic and/or transmission signal changes, as those may be understood to be the indication of the harmonic 305, and thus, the indication of the harmonic 305 may be continuously updated accordingly and the indication of the harmonic 305 may also be continuously available.

The indication of the harmonic 305 is associated with, and thus representative of, the harmonic 320, which may be understood as a harmonic signal and/or harmonic noise. Based on the indication of the harmonic 305, characteristics of the harmonic 320 may be determined. The determination may comprise for example constructing or predicting characteristics of the harmonic 320. As such, for example from the Tx signal, the harmonic noise may be determined, in other words, it may be generated or computed, and based on that, the harmonics present in the receiver may be mitigated.

Once the indication of the harmonic 305 is obtained, it may be adapted to the receive channel and its harmonic noise characteristics. For example, if the indication of the harmonic 305 comprises the Tx signal, the Tx signal is non-linearly transformed to match the noise, an order 3 polynomial be used to model the relationship between the Tx and the harmonic occurring in a receiver, the TX signal may also be delayed, frequency shifted, and sample rate matched to achieve the adaptation to the receive channel and its harmonic noise characteristics. Thus, in this example embodiment, as part of the adaptation, delay 310 that matches, at least substantially, that of propagation delay may be applied. The propagation delay may be identified using for example correlation means. Then, the indication of the harmonic is subjected to a frequency shift element, which in this example embodiment is a numerically controlled oscillator (NCO) 312. In general, supporting network related aspects such as filtering, sample rate matching units or frequency shift elements, such as NCOs, allows to adapt the indication of the harmonic 305 to the receive channel and to the characteristic of the harmonic 320. Settings regarding those aspect may be obtained for example based on known Tx/Rx frequency settings and/or DAC/ADC sample rates.

Harmonic model 316, which may be used to represent the harmonic 320, may then be obtained. The model may be linear or nonlinear, depending on the indication of the harmonic 305. The harmonic model may be for example an N-tap linear filter or a memory or memoryless polynomial model in the order of 2, 3 or 4, although it is to be noted that the order could be something else than 2-4 as well. Linear filter may be used for example when the harmonic is fed back via a harmonic receiver.

After obtaining the harmonic model 320, the harmonic model 320 may be subjected to reception and decimation filter 318, which corresponds to the filter 326 used for receiving the signal 325. As such, the estimated harmonic is determined. It is to be noted that determining the harmonic may also be understood as being an identification step.

When receiving the signal 325, the Rx signal, there is also the harmonic 320 present in the signal 322 that is received and subjected to the ADC conversion 324 that is performed in order obtain a digital format of the signal 322. The signal 322, which comprises the harmonic 320 and the Rx signal 325, is then subjected to filtering, which in this example embodiment is Rx and decimation filtering 326. After this filtering, the estimated harmonic is used 330 to mitigate the harmonic 320, which may also be understood as harmonic noise, from the signal 322 and signal 340 is obtained. Signal 340 corresponds substantially to the Rx signal 325 as the harmonic 320 is cleared from it at least in a substantial manner. The residual, which may be left of the harmonic 320, may depend on the harmonic model complexity, the nature of the received harmonic noise and identification exactness.

The harmonic model 316 may be updated based on software (SW) model identification 314. The SW model identification 314 may comprise a learning procedure based on captured Tx and Rx signals, and it may also utilize predetermined knowledge of parameters regarding the access node and carriers. The learning procedure may also be repeated in a continuous manner on normal data traffic to account for environmental changes such as temperature drifts. The SW model identification 314 may utilize least means square (LMS) or least square (LS) means to identify harmonic model coefficients. Classical Wiener or Wiener Hammerstein models may be utilized as well as neuronal networks to account for the linear or nonlinear Rx/Tx relationship of SW model identification 314 and harmonic modelling 316. It is to be noted that for the linear Rx/Tx relationship a receiver is required. In this example embodiment, multiple harmonics of e.g. 2nd order from PA and PIM may be addressed at the same time and/or more than one RX channel may be subjected to mitigation of harmonics.

In this example embodiment, harmonic mitigation from 2nd to 4th order is considered. As mentioned, the harmonic model may be for example a linear filter or a memoryless polynomial model (MLP) or a memory polynomial model (MPM) in dependence of the available reference TX data.

Thus, in general, based on an indication of a harmonic, harmonic that is received when receiving a signal may be matched in time, frequency, characteristic and magnitude level. Thus, the harmonic that is comprised in a received signal may be mitigated from the digital receive data stream using a determined estimation of the harmonic while continuously determining an exact copy of the harmonic based on the associated Tx data stream or a reference associated with it. By mitigating the harmonic, SNIR may be improved and thus an increased throughput for a cell or a carrier, as well as an overall improvement of Rx performance, may be achieved.

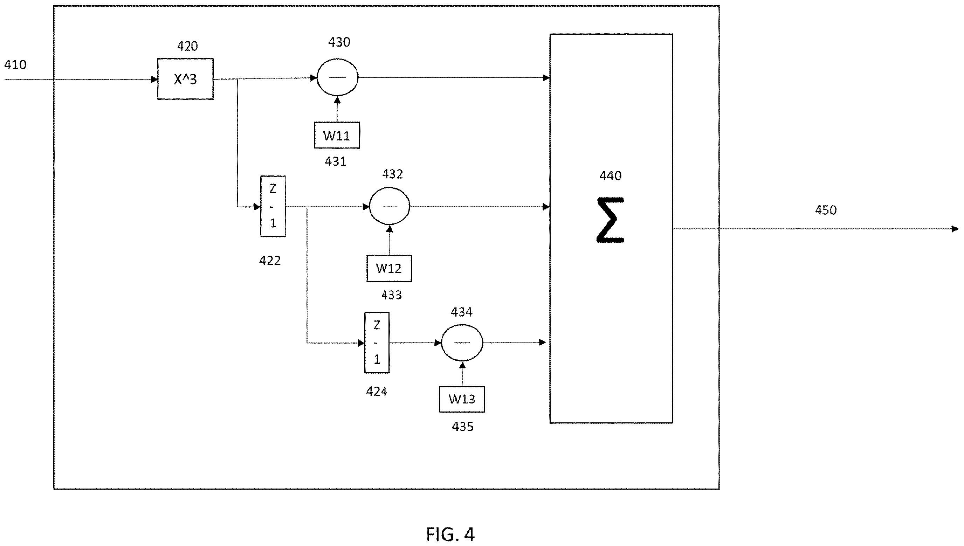

FIG. 4 illustrates an example embodiment in which 3^{rd} order harmonic model with memory and delay structure is illustrated in a simplified manner. Such model could be used to determine input/output mapping, that is, the mapping between the Tx and Rx signals. As input 410, concurrently captured Tx and Rx data may be used. Alternatively, Tx data may be actively measured to determine a moment in time when a harmonic response in the Rx data is determined and that may then be used as input. In general, the delay propagation difference may be determined by deriving from the known Tx carrier air frequencies which harmonic needs to be considered, such as 2nd/3rd/4th etc. This defines the maximum degree of a nonlinear polynomial model which should be used for the input/output mapping. It is to be noted that the harmonic model is not 1-dimensional but instead a model for 2nd harmonic may have terms for 2nd order, but also for other orders such as 4th or 8th depending on what is considered as most suitable. Adding memory to such a model may help to improves the performance. Also, working with polynomial models may allow to compute analytically individual weights with the captured data e.g as a classical Wiener Hopf approach. In this example embodiment, a 3rd order nonlinear characteristic 420 is followed by a finite impulse response (FIR) filter adding memory. The FIR structure illustrated in FIG. 4 represents the memory and magnitude matching and the memory may be considered as fine delay adjustment. Thus, the input 410 is first determined 420 to be of 3^{rd} order. After this, the output of 420 is provided as two identical inputs such that a first input is multiplied 430 with a complex coefficient 431, the second input is delayed 422 and then multiplied 432 with a complex coefficient 433. The output of the delay is then further subjected to the delay 424 after which it is multiplied 434 using a complex coefficient 435. After the multiplications, the signals are summed together 440 and thus, the output 450 is obtained. The coefficients 431, 433 and 435 may be computed using for example an LMS approach or a neuronal network such that the coefficients 431, 433 and 435 are learnt based on captured data. It is to be noted that the filters and weighting coefficients introduced in this example embodiment may be used for scaling when estimating harmonic.

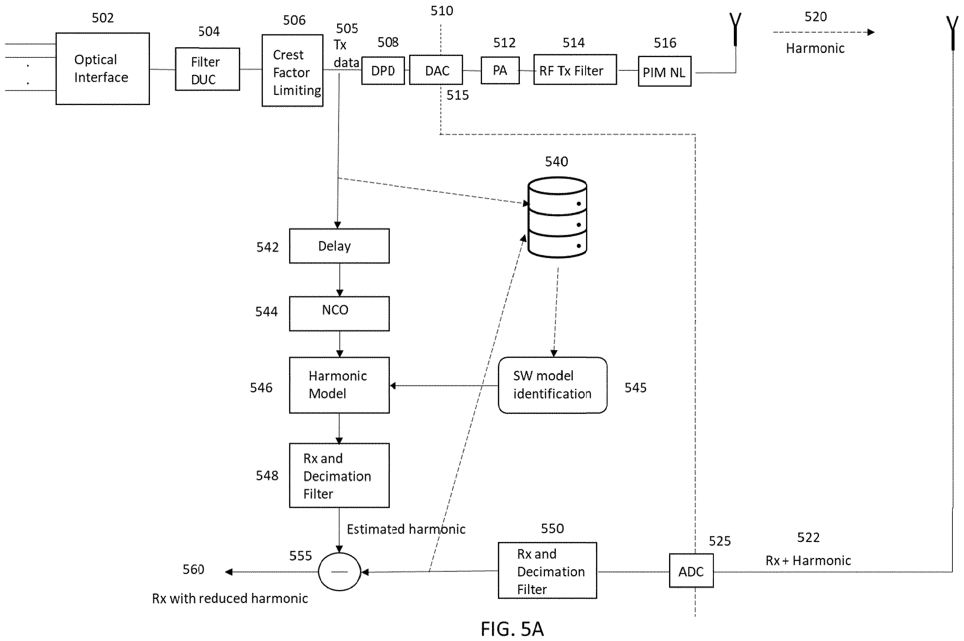

FIG. 5A illustrates an example embodiment in which harmonic is mitigated using Tx data, that is in a digital format, as an indication of a harmonic. In this example embodiment, an access node transmits data using Tx signals and also receives data using Rx signals. The transmission elements comprise an optical interface 502, a filter for digital up conversion 504, a crest factor limiting unit 506, the transmitted data, Tx data 505, a digital predistortion 508 and then a digital to analogue conversion 515 after which the signal is in analogue format. It is to be noted that the optical interface 502, filter 504, crest factor limiting unit 506 and digital pre-distortion are elements comprised in an access node and are illustrated for the purpose of providing context to the example embodiment of mitigating harmonic. The analogue signal may be amplified using PA 512 after which filtering may be done using a Tx filter 514. PIM NL 516 causing PIM harmonic may also be present. PA 512 may be a source of active harmonic and PIM NL 516 may represent for example passive hardware structure inside an antenna, which may be understood as an antenna system including cables, connectors, etc., that causes passive harmonic. The transmission may thus cause harmonic 520 to be introduced to a Rx signal causing Rx signal with harmonic 520 to be a received signal 522 which is then converted from analogue format to a digital format using ADC 525. The dashed line 510 indicates the division between digital and analogue format. To the digital signal, filtering is then performed, which in this example embodiment is an Rx and decimation filtering 550. The filtered signal may then be provided as input to a memory 540, which may be for example random access memory (RAM) and may be comprised in any suitable location.

To be able to reduce the harmonic 520 from the received signal, the Tx data 505 may be provided as input to a delay 545 unit for matching the Tx data 505 to that of propagation delay of the receiving channel and after this the Tx data is subjected to an NCO 544. It is to be noted that in this example embodiment the Tx data 505, before subjecting it to the delay 542, may also be provided as input to be stored to the memory 540. This may allow the nonlinear characteristic of the Tx data stream to be learnt such that those can be utilized for predicting PIM harmonic. The learning may be performed in a continuous manner while capturing over a period of time concurrently the Tx data 505 stream and the received data stream with the PIM harmonic noise 555 which is also stored to the memory 540.

After the NCO 546, a harmonic model 546 may be obtained. The harmonic model, as in the example embodiment of FIG. 3, may also be affected by a SW model identification 545. In this example embodiment, the SW model identification 545 has access to the memory 540 and may also have knowledge regarding parameters such as UL/DL data sample rates, the relative digital and absolute air frequencies, carrier bandwidths in DL/UL e.g. LTE20. Thus, NCO settings for an eventual frequency shift operation, sample rate matching between DL/UL, required FIR filtering for a given RX correction bandwidth etc. may be known by the SW model identification 545. Unknown, by the SW model identification 545, may be the exact harmonic model and the propagation delay difference of the delay 542 and real path of the harmonic 520. Yet, the example embodiment of FIG. 4 illustrates an example of how those could be determined by the SW model identification 545. The SW model identification 545 may then provide as input to the harmonic model 546 modifications such that a suitable harmonic model, in other words, a harmonic model 546 that is chosen based on the determinations performed by the SW model identification 545, is obtained. It is to be noted that that continuous flow of Tx data may allow to produce a harmonic data stream which corresponds to the harmonic 520 comprised in the received data stream. The harmonic model itself may comprise for example a nonlinear neuronal network and neuron weights that are to be trained according to the measured and stored input/output characteristics. The training may thus be affected based on input received from the SW model identification 545.

Once the harmonic model 546 is obtained, then it may be filtered with a filter 548 that corresponds to the filter 550 and thus, obtain an estimated harmonic that is then subtracted 555 from the Rx signal comprising the Rx data and the harmonic noise. As such, a signal 560 with harmonic 520 substantially cleaned from it, is obtained.

In this example embodiment, the initial learning process or system identification step of the SW model identification 545 may be performed either in a dedicated learning phase with test signals at power up of the access node or at runtime with normal user traffic. It is to be noted that parameter adaptations such as delay, and NL characteristic may change due to temperature drift or other environmental effects and may need to be readjusted on a periodic base while capturing concurrently DL and UL Rx traffic. The re-learning may be done for example via software interaction on a regular timer base or may be triggered when the cancellation performance degrades over time in an automated machine learning fashion. After re-learning, the SW model identification 545 may provide input to the harmonic model 546 accordingly thus adjusting the estimation of the harmonic.

The approach described above for mitigating harmonic may be utilized for passive PIM harmonics and also for active harmonics caused by the PA as source or a combination of those. If the approach is utilized for active harmonics, then the PIM NL may not be present. The complexity of harmonic model may be different regarding if active or passive harmonic is to be reduced. A mixture of active and passive harmonic or several of the same nature may be mitigated together as long as those effects can be distinguished in time and modelled. For example, the example embodiment of FIG. 3 may be able to mitigate those when multiple instances are available with different delays.

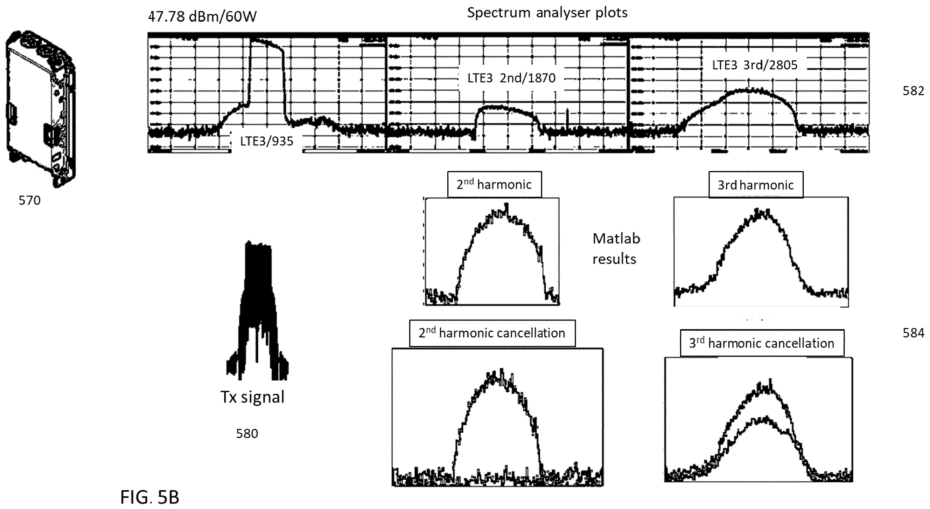

FIG. 5B illustrates PIM harmonic cancellation results obtained from an experimental setup with radio head 570. Spectrum analyser plots 582 illustrate Tx signal 580, which is an LTE3 signal, characteristic and PIM harmonics of 2nd order at 1870MHz and 3rd order at 2805 MHz. In this example configuration a potential receive channel would operate at 1870 MHz or at 2805 MHz and be affected by the PIM noise harmonics. The 2nd row shows the plot of the TX signal and a 2nd /3rd harmonic noise receiver data concurrently captured in memory. For simplicity, only harmonic noise is shown.

Tx data, 2nd and 3rd PIM harmonic data has been captured and is processed with Matlab 584 mimicking the harmonic noise modelling structure. After the learning procedure as described above the cancellation results is depicted at the bottom, showing that cancellation for 2nd harmonic removes nearly all of the noise and slightly less efficient for 3rd harmonic according to selected model complexity. Here a harmonic MPM model 2nd/3rd order was used.

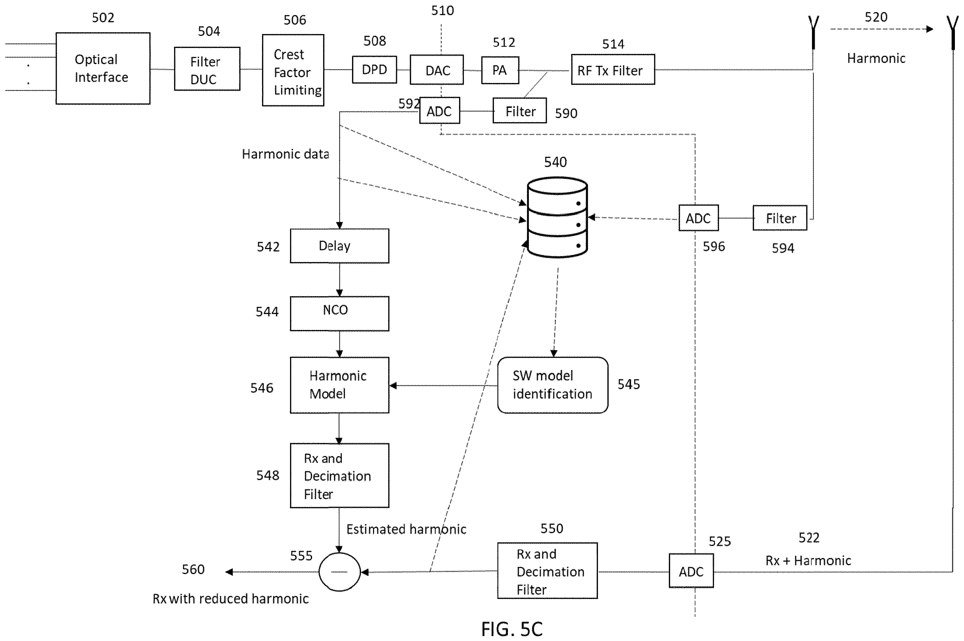

FIG. 5C illustrates and example embodiment with a modification to the example embodiment of FIG. 5A. This example embodiment is suitable for mitigating active harmonic and as such, the PIM NL 516 present in the example embodiment of FIG. 5A is not comprised in this example embodiment. In this example embodiment, the PA harmonic is derived with an auxiliary receiver as input for determining the estimated harmonic. It is to be noted though that in some other example embodiments, having the auxiliary receiver may be used for mitigating passive harmonic as well. The indication of a harmonic may thus be considered to be a copy of the harmonic PA noise. This allows to use a linear harmonic model or a simple linear finite impulse response (FIR) filter approach to adapt modelled noise to the received noise characteristic as the cleaning target. In this example embodiment, the Tx signal, after applying the amplification by the PA 512, is filtered using filter 590 and then converted to digital format using ADC 592, after which it is used as the indication of a harmonic and also stored to the memory 540. Additionally, after the Tx signal has been filtered using the filter 514, the signal is, in addition to transmitting, provided to the filter 594 after which the ADC 596 converts it to a digital format and then it is also stored to the memory 540. The filter 594 and ADC 596 may thus be understood as an auxiliary receiver. The architecture of this example embodiment addresses also a situation in which access to the digital Tx data is not always be possible.

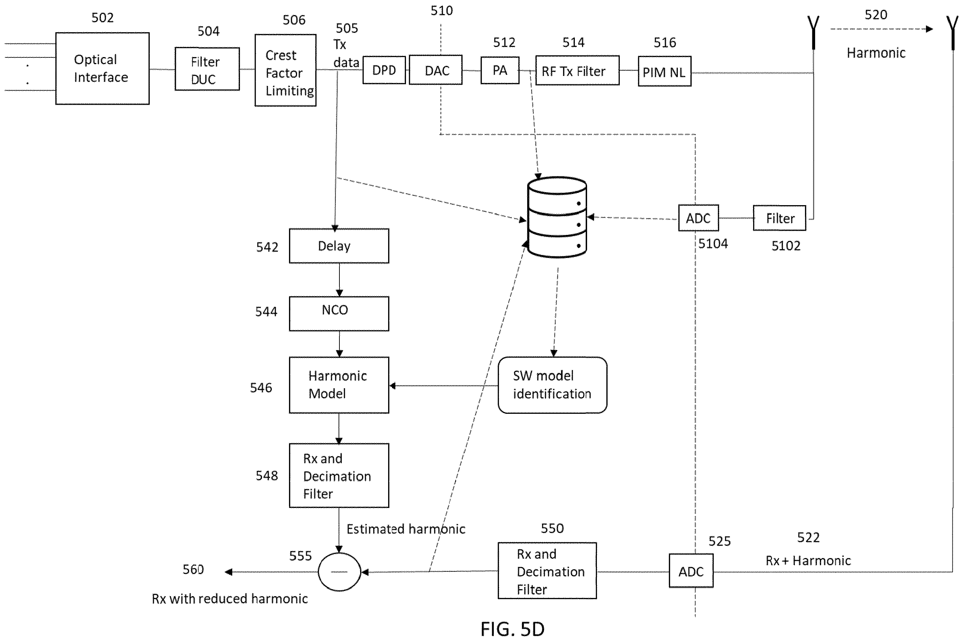

FIG. 5D illustrates another example embodiment that is a modification of the example embodiment of FIG. 5A. In this example embodiment, after the Tx signal has been amplified by the PA 512, the signal is additionally stored to the memory 540. Also, the signal that is to be transmitted, is also filtered using the filter 5102 and then converted, by the ADC 5104, to a digital format and saved to the memory 540 as well. The filter 5102 and the ADC 5104 may be considered as an auxiliary receiver. In this example embodiment, it is additionally possible to identify also other radio frequency (RF) impairments more precisely and use those to further enhance the mitigation of harmonic by improving the estimation of the harmonic.

In general, the memory 540 in the example embodiments described above allows to store such data that when access by the SW model identification 545 helps to obtain a better estimation of harmonic that is then used to mitigate the harmonic 520. The SW model identification 545 may then provide input to harmonic model 546 based on which coefficients of the harmonic model 546 for example may be updated.

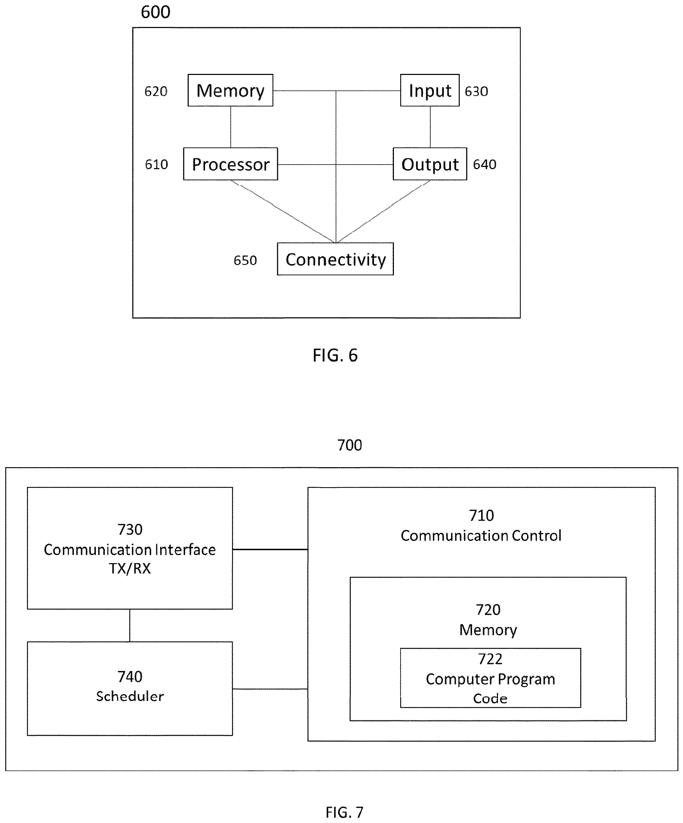

FIG. 6 illustrates an apparatus 600, which may be an apparatus such as, or comprised in, a terminal device, according to an example embodiment. The apparatus 600 comprises a processor 610. The processor 610 interprets computer program instructions and processes data. The processor 610 may comprise one or more programmable processors. The processor 610 may comprise programmable hardware with embedded firmware and may, alternatively or additionally, comprise one or more application specific integrated circuits, ASICs.

The processor 610 is coupled to a memory 620. The processor is configured to read and write data to and from the memory 620. The memory 620 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 620 stores computer readable instructions that are execute by the processor 610. For example, non-volatile memory stores the computer readable instructions and the processor 610 executes the instructions using volatile memory for temporary storage of data and/or instructions.

The computer readable instructions may have been pre-stored to the memory 620 or, alternatively or additionally, they may be received, by the apparatus, via electromagnetic carrier signal and/or may be copied from a physical entity such as computer program product. Execution of the computer readable instructions causes the apparatus 600 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 600 further comprises, or is connected to, an input unit 630. The input unit 630 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 630 may comprise an interface to which external devices may connect to.

The apparatus 600 also comprises an output unit 640. The output unit comprises or is connected to one or more displays capable of rendering visual content such as a light emitting diode, LED, display, a liquid crystal display, LCD and a liquid crystal on silicon, LCoS, display. The output unit 640 further comprises one or more audio outputs. The one or more audio outputs may be for example loudspeakers or a set of headphones.

The apparatus 600 may further comprise a connectivity unit 650. The connectivity unit 650 enables wired and/or wireless connectivity to external networks. The connectivity unit 650 may comprise one or more antennas and one or more receivers that may be integrated to the apparatus 600 or the apparatus 600 may be connected to. The connectivity unit 650 may comprise an integrated circuit or a set of integrated circuits that provide the wireless communication capability for the apparatus 600. Alternatively, the wireless connectivity may be a hardwired application specific integrated circuit, ASIC.

It is to be noted that the apparatus 600 may further comprise various component not illustrated in the FIG. 6. The various components may be hardware component and/or software components.

The apparatus 700 of FIG. 7 illustrates an example embodiment of an apparatus that may be an access node or be comprised in an access node. The apparatus may be, for example, a circuitry or a chipset applicable to an access node to realize the described embodiments. The apparatus 700 may be an electronic device comprising one or more electronic circuitries. The apparatus 700 may comprise a communication control circuitry 710 such as at least one processor, and at least one memory 720 including a computer program code (software) 722 wherein the at least one memory and the computer program code (software) 722 are configured, with the at least one processor, to cause the apparatus 700 to carry out any one of the example embodiments of the access node described above.

The memory 720 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 700 may further comprise a communication interface 730 comprising hardware and/or software for realizing communication connectivity according to one or more communication protocols. The communication interface 730 may provide the apparatus with radio communication capabilities to communicate in the cellular communication system. The communication interface may, for example, provide a radio interface to terminal devices. The apparatus 1700 may further comprise another interface towards a core network such as the network coordinator apparatus and/or to the access nodes of the cellular communication system. The apparatus 700 may further comprise a scheduler 1740 that is configured to allocate resources.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising at least one processor, and at least one memory including a computer program code, wherein the at least one memory and the computer program code are configured, with the at least one processor, to cause the apparatus to:
transmit a first signal;
obtain an indication of a harmonic, wherein the harmonic is caused by the transmission of the first signal;
determine, based on the indication of the harmonic, an estimation of the harmonic;
receive a second signal, wherein the second signal comprises the harmonic; and
subtract the estimation of the harmonic from the second signal.

2. An apparatus according to claim 1, wherein the indication of the harmonic comprises the first signal, a reference signal or the harmonic which is a passive harmonic.

3. An apparatus according to claim 1 or 2, wherein determining the estimation of the harmonic comprises applying to the indication of the harmonic a delay, frequency shift and filtering.

4. An apparatus according to claim 3, wherein applying delay comprises providing the indication of the harmonic as an input to a delay unit for matching the indication of the harmonic to a propagation delay of a receiving channel.

5. An apparatus according to claim 4, wherein the apparatus is further caused to determine the propagation delay based on a correlation approach and the correlation approach is based on capturing the first signal and the second signal.

6. An apparatus according to claim 4, wherein the apparatus is further caused to determine the propagation delay based on measuring the first signal to determine a moment in time when the harmonic in the second signal is determined.

7. An apparatus according to any previous claim, wherein determining the estimation of the harmonic comprises capturing transmission of the first signal for a period of time and adjusting the determined estimation of the harmonic based on the captured transmission.

8. An apparatus according to claim 7, wherein capturing the transmission of the first signal for a period of time comprises storing the captured transmission to a memory unit and the apparatus is further caused to learn non-linear characteristics of the first signal based on the captured transmission stored to the memory unit.

9. An apparatus according to any previous claim, wherein the apparatus is further caused to determine the estimation of the harmonic based, at least partly, on a software model identification, wherein the software model identification

10. An apparatus according to any of claims 7-9, wherein the capturing transmission of the first signal comprises capturing the first signal before digital to analogue conversion is applied to it, and/or after the signal has been converted to analogue format, amplified and filtered.

11. An apparatus according to any of claims 7-9, wherein the capturing transmission of the first signal comprises capturing the first signal after power amplification has been applied to the first signal.

12. An apparatus according to any previous claim, wherein the apparatus is further caused to determine the estimation of the harmonic based, at least partly, on input from a software model identification unit.

13. An apparatus according to claim 12, wherein the software model identification unit comprises knowledge, or is capable of obtaining knowledge regarding one or more of the following parameters: uplink/downlink data sample rates, relative digital and absolute air frequencies, carrier bandwidths used in uplink and downlink transmissions, or settings for required filtering operations.

14. An apparatus according to any previous claim, wherein the estimation of the harmonic is based on a linear filter, a memoryless polynomial model or a memory polynomial model.

15. A method comprising:
transmitting a first signal;
obtaining an indication of a harmonic, wherein the harmonic is caused by the transmission of the first signal;
determining, based on the indication of the harmonic, an estimation of the harmonic;
receiving a second signal, wherein the second signal comprises the harmonic; and
subtracting the estimation of the harmonic from the second signal.
